## Europäisches Patentamt
## European Patent Office
## Office européen des brevets

(11) Veröffentlichungsnummer: **0 125 673**
**B1**

(12) # EUROPÄISCHE PATENTSCHRIFT

(45) Veröffentlichungstag der Patentschrift:
**03.02.88**

(21) Anmeldenummer: **84105419.0**

(22) Anmeldetag: **12.05.84**

(51) Int. Cl.⁴: **F 28 D 21/00**

(54) **Wärmetauscher.**

(30) Priorität: **13.05.83 CH 2612/83**

(43) Veröffentlichungstag der Anmeldung:
**21.11.84 Patentblatt 84/47**

(45) Bekanntmachung des Hinweises auf die Patenterteilung:
**03.02.88 Patentblatt 88/5**

(84) Benannte Vertragsstaaten:
**AT BE CH DE FR GB IT LI LU NL SE**

(56) Entgegenhaltungen:
**EP-A-0 014 863**
**DE-A-2 917 969**
**DE-A-2 939 827**
**DE-C-809 918**
**FR-A-2 519 125**
**US-A-4 078 602**
**US-A-4 138 062**
**US-A-4 343 355**

(73) Patentinhaber: **OPTIGAL SA, 2 route d'Oron, CH-1010 Lausanne (CH)**

(72) Erfinder: **Cholly, Alfred, Au Grand- Champ, CH-1349 Eclépens (CH)**

(74) Vertreter: **Büchel, Kurt F., Dr., Patentanwalt Dr. Kurt F. Büchel Bergstrasse 297, FL- 9495 Triesen (LI)**

EP 0 125 673 B1

LIBER, STOCKHOLM 1988

## Beschreibung

Die Erfindung bezieht sich auf einen Wärmetauscher nach dem Oberbegriff des Anspruches 1. Ein derartiger Wärmetauscher ist der DE-A-2 939 827 zu entnehmen. Dort sind im wesentlichen horizontal verlaufende Isolierwände vorgesehen, die die beiden Strömungskanäle voneinander trennen. Dabei ergibt sich ein ungünstiger Strömungsverlauf mit Wirbelbildung, und dadurch bedingt ein hoher Luftwiderstand, bzw. ein schlechter Wirkungsgrad, da die Wirbelbildung dazu führt, dass sich Schmutzpartikel besonders in den schwer zugänglichen Ecken ansammeln und dort kaum mehr entfernbar sind. Die Reinigung wird schwierig und zeitraubend.

Der Erfindung liegt die Aufgabe zu Grunde, die Ansammlung von Schmutzpartikeln zu verhindern oder zumindest drastisch zu reduzieren, die Reinigung zu erleichtern und zu verkürzen, sowie den Wirkungsgrad des Wärmetauschers zu verbessern. Dies gelingt in einfacher Weise durch das Kennzeichen des Anspruches 1. Dadurch wird nicht nur die obgenannte Aufgabe gelöst, sondern die Herstellung des Wärmetauschers sogar noch vereinfacht und verbilligt.

Schräge Wände in Wärmetauschern sind zwar aus der US-A-4 138 062 schon bekannt geworden. Dort dienen sie allerdings nicht der Umlenkung einer Strömung, sondern einer Verbreiterung des Strömungsquerschnittes und damit einer Verlangsamung der Strömung, und sie reichen nicht bis zur äusseren Strömungsführung.

Im erfindungsgemässen Wärmetauscher hingegen kann die Reinigung ohne Zeitverlust in gewissen Zeitabständen leicht erfolgen, wenn im Bereiche der inneren Auslassöffnung(en) eine gegen die schrägen Abdeckwände gerichtete Sprinkleranlage vorgesehen ist. Die versprühte Reinigungsflüssigkeit kann nämlich dann entlang der Schräge gut abfliessen und gelangt dabei überall hin, wo sich Verschmutzungen ergeben könnten, so dass verbleibende Schmutzansammlungen unmöglich sind.

Sowohl zur Aufnahme der Reinigungsflüssigkeit, aber auch zur Aufnahme von Kondensat ist es vorteilhaft, wenn unterhalb der unteren schrägen Abdeckwand eine Flüssigkeitsauffangrinne angeordnet ist.

Herstellungsmässig lässt sich die Schräge am einfachsten dadurch erzielen, dass die schrägen Abdeckwände von etwa trapezförmigen Wandungsteilen gebildet sind, deren kleinere der zueinander parallelen Trapezseiten im Bereiche der radial äusseren Strömungsführung, die grössere im Bereiche der inneren Strömungsführung und der inneren Ein- bzw. Auslassöffnungen mit den Querwänden verbunden sind. Dies kann so erfolgen, dass an die Querwände mit entsprechend abgeschrägten unteren und oberen Kanten kleine trapezförmige (oder auch dreieckförmige) Blechstücke jeweils angelötet werden. Noch einfacher allerdings wird die Herstellung, wenn die trapezförmigen Wandungsteile nicht als Einzelteile ausgebildet sind, sondern die Querwände und die trapezförmigen Wandungsteile aus einem gemeinsamen Wandkörper, z. B. einer Blechtafel, geschnitten bzw. gestanzt sind, wobei die trapezförmigen Wandungsteile über ihre kleinere Trapezseite einstückig mit den Querwänden sind.

Von Zeit zu Zeit ist es auch bei Einbau der erwähnten Sprinkleranlage bei rauheren Betriebsbedingungen unumgänglich, den Wärmetauscher einer Generalreinigung zu unterziehen. Um auch dabei die Reinigung zu erleichtern und die Arbeitszeit zu verkürzen, sind gemäss einer Weiterbildung die Abdeckwände gemeinsam mit den Querwänden und der inneren Strömungsführung aus der äusseren Strömungsführung herausschiebbar angeordnet. Mit anderen Worten darf hierzu der maximale Querschnitt der aus Abdeckwänden, Querwänden und innerer Strömungsführung bestehenden Einheit höchstens so gross sein, wie die lichte Weite der äusseren Strömungsführung, allerdings abgesehen von eventuellen Halterungen, die etwa von der äusseren Strömungsführung konsolenartig nach innen vorstehen können, um seitliche Pratzen dieser Einheit abzustützen, wobei die Einheit dann nach Verdrehung um ihre Längsachse in eine Lage gebracht wird, in der sich die Konsolen und die Pratzen nicht mehr gegenüberliegen, so dass ein Herausschieben möglich ist.

Statt der oben beschriebenen Konsolenkonstruktion hat es sich jedoch als günstiger erwiesen, wenn zur lösbaren Befestigung der Quer- und Abdeckwände sowie der inneren Strömungsführung an deren Unterseite entfernbare Stützen vorgesehen sind. Nachdem dann die Einheit entsprechend gesichert ist, beispielsweise an ihrer Oberseite an einem Flaschenzug aufgehängt oder von unten durch ein Hebezeug unterstützt ist, können dann die von unten leicht zugänglichen Stützen einfach entfernt, und es kann die Einheit herausgeschoben werden. Gegebenenfalls weist diese Einheit angeformte Stütz- und Verbindungsflächen für den Flaschenzug bzw. das Hebezeug auf, z. B. Haken für den Flaschenzug oder Stützfüsse zum Anbringen eines wagenheberartigen Hebezeuges.

Diese Stützen verlaufen vorzugsweise schräg von innen und oben nach unten gegen die radial äussere Strömungsführung und ergeben so eine fachwerkartige Verspreizung, wobei sie insbesondere mit ihrem oberen Ende im Bereiche der schrägen Abdeckwände, zweckmässig an deren radial innerem Ende, angreifen.

Weitere Einzelheiten ergeben sich an Hand der nachfolgenden Beschreibung von in der Zeichnung schematisch dargestellten Ausführungsbeispielen. Es zeigen:

Fig. 1 einen Längsschnitt durch den Ober- und Unterteil eines erfindungsgemäss ausgebildeten Wärmetauschers;

die Fig. 2 und 3 die Herstellung bzw.

Ausbildung der schrägen Abdeckwände gemäss zweier verschiedener Ausbildungen.

Ein Wärmetauscher 1 besteht in an sich bekannter Weise aus einer äusseren Strömungsführung 2 und einer koaxialen inneren Strömungsführung 3, zwischen denen radiale Querwände 4 vorgesehen sind. Die Strömungsführungen 2, 3 können an sich beliebigen Querschnitt besitzen, sind aber bevorzugt mit einem kreisförmigen Querschnitt versehen.

Die äussere Strömungsführung 2 besitzt eine radial äussere Einlassöffnung 5 und eine äussere Auslassöffnung 6, wogegen die innere Strömungsführung 3 eine innere Einlassöffnung 7 und eine innere Auslassöffnung 8 aufweist. Die inneren Öffnungen 7, 8 können in der dargestellten Weise als rundumlaufende Schlitze ausgebildet sein, so dass die innere Strömungsführung 3 in drei Rohrabschnitte 9, 10 und 11 unterteilt ist. Es können aber auch die Schlitze 7, 8 in der bekannten Weise durch Zwischenstege unterteilt sein, so dass sich eine Vielzahl von Oeffnungen 7, 8 rund um den Umfang der dann aus einem einzigen Rohr bestehenden Strömungsführung 3 ergibt.

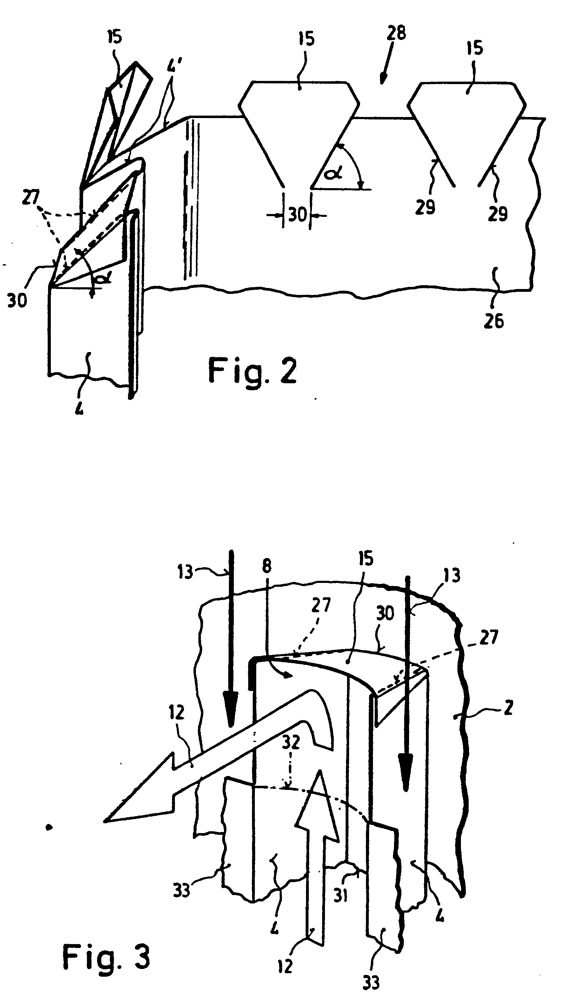

Die Querwände 4 können zwar an sich aus einzelnen Wandstücken bestehen, sind aber bevorzugt in der Weise aufgebaut, wie dies aus Fig. 2 ersichtlich ist, wobei eine Ausführung gemäss Fig. 3 für manche Anwendung ebenfalls vorteilhaft sein kann. In jedem Falle ergeben sich in bekannter Weise abwechselnd (über den Umfang verteilt) nur mit der inneren Strömungsführung 3 verbundene erste Strömungskanäle 12 und nur mit der äusseren Strömungsführung 2 in Verbindung stehende zweite Strömungskanäle 13.

Die bisher beschriebenen Teile entsprechen im wesentlichen dem Stande der Technik. Abweichend davon sind jedoch die ersten und zweiten Strömungskanäle 12 bzw. 13 unten und oben voneinander durch untere und obere, schräg verlaufende Abdeckwände 14 bzw. 15 getrennt. Während sich bei den bekannten horizontal verlaufenden Abdeckwänden nicht nur ein ungünstiger Strömungsverlauf, sondern auch die Ablagerung von Schmutzstoffen begünstigende Ecken und Winkeln ergaben, wird durch die von der jeweiligen Öffnung 7 bzw. 8 weg in Richtung zur jeweils anderen Öffnung 8 bzw. 7 gerichteten und nach aussen verlaufenden Schrägflächen das Ansetzen von Schmutz erschwert, weil dadurch eine Wirbelbildung des die Strömungsführung 3 durchziehenden Fluids vermieden ist und dieses durch das ständige Bestreichen der Schrägflächen der Abdeckwände 14, 15 etwaig abgesetzte Schmutzteile wieder mitreisst.

Dies ist besonders dann der Fall, wenn die innere Strömungsführung 3 zum Hindurchleiten eines Abwärme führenden Fluids, wie etwa der Abluft von Ställen, dient - wie dies der bevorzugten, wenn auch an sich bekannten Ausführung entspricht - obwohl die Anordnung prinzipiell auch umgekehrt werden könnte und das wärmeführende Fluid auch in der äusseren Strömungsführung 3 und gegebenenfalls entgegen den dargestellten Strömungspfeilen von der Öffnung 8 zur Öffnung 5 fliessen könnte.

Da Stallabluft oft mit Ammoniakdämpfen und Schmutzteilchen versetzt ist, erschwert gerade die Führung dieser Abluft durch die Strömungsführung 3 nicht nur in der erwähnten Weise das Absetzen dieser Verunreinigungen, sondern es wird gleichzeitig auch die Reinigung erleichtert. Deshalb ist vorzugsweise im Bereiche der inneren Auslassöffnung 8 eine gegen die schrägen Abdeckwände 15 gerichtete Sprinkleranlage 16 vorgesehen, deren Reinigungsflüssigkeit von den Abdeckwänden 15 nach unten und über die schrägen unteren Abdeckwände 14 fliesst.

Dies ist insbesondere im Winterbetrieb erforderlich, wenn die Klappen 34 waagrecht stehen und die Abluft 12 entlang der Querwände 4 des Wärmetauschers zwingen. Im Sommer hingegen ist weder eine Vorwärmung der Zuluft 13 erforderlich, sondern im Gegenteil an besonders heissen Tagen deren Vorkühlung, noch eine Reinigung der Abdeckwände 14, 15 durch die Sprinkleranlage 16, weil dann die Klappen 34 vertikal gestellt werden und die Abluft 12 nicht entlang der Querwände 4, sondern zentral nach oben strömt. Die Sprinklerdüse 16 wird dann durch ein (nicht gezeigtes) Verlängerungsrohr über die Abdeckhaube 24 hinausgeführt, und es werden die um den Wärmetauscheraufsatz 2 herumliegenden Dachteile mit Wasser besprüht. Die an den so abgekühlten Dachteilen vorbeistreichende Zuluft 13 bewirkt in Einzelfällen eine um 3-4 Grad tiefere Innentemperatur des Gebäudes als ohne eine solche Vorkühlung.

Während es prinzipiell möglich ist, ebenso wie beim Stande der Technik auch den erfindungsgemässen Wärmetauscher 1 bloss mit Konvektionsströmung zu betreiben, ist bevorzugt ein zwangsläufiger Lufttransport vorgesehen. Zu diesem Zwecke ist unterhalb des Rohrabschnittes 9 ein Doppelstromventilator 17 vorgesehen, der mit äusseren, in die eine Richtung transportierenden Ventilatorflügeln 18 das zweite, zu erwärmende Fluid nach unten bläst, mit inneren, in die andere Richtung transportierenden Ventilatorflügeln 19 das erste, wärmeführende Fluid nach oben. Unterhalb des Ventilators 17 ist ein Mündungsrohrstück 20 angeschlossen. An dieser Stelle sei auch erwähnt, dass der Rohrabschnitt 9 für Umluft Öffnungen 21 aufweisen kann, die durch einen Drehschieber 22 ganz oder teilweise verschliessbar sind. Der Betrieb mit Umluft empfiehlt sich beispielsweise bei der Inbetriebnahme eines Stalles bis zu seiner Erwärmung auf die Normaltemperatur.

Gerade aber, wenn eine elektrische Einrichtung in Form des Ventilators 17 vorgesehen ist, sollte vermieden werden, dass dieser beim Reinigen mittels des Sprinklers 16 nass wird. Auch Kondensat könnte beim Herabrinnen entlang der schrägen Abdeckwände 14 schädlich sein. Anderseits ist es auch bei blosser Konvektion ohne den Ventilator 17 zweifellos lästig, an einer Stelle des darunterliegenden Raumes immer wieder herabtropfende Nässe zu haben. Deshalb ist es vorteilhaft, wenn gemäss einer bevorzugten Ausführung unterhalb der unteren schrägen Abdeckwand 14 eine Flüssigkeitsauffangrinne 23 vorgesehen ist, von der die Flüssigkeit leicht abgeleitet werden kann. Zu diesem Zwecke mag die Flüssigkeitsauffangrinne 23 mit wenigstens einem (nicht dargestellten) nach unten führenden Ableitungsrohr verbunden sein.

Durch die oben beschriebenen Massnahmen wird die erforderliche Reinigungsarbeit einerseits durch geringere Verschmutzungsgefahr und anderseits durch erleichterte Reinigung mittels der Sprinkleranlage 16 herabgesetzt. Von Zeit zu Zeit wird es aber unumgänglich sein, den Wärmetauscher 1 zu zerlegen und einer Generalreinigung zu unterziehen. Um auch dabei die erforderliche Arbeitszeit zu verkürzen, sind zweckmässig die Abdeckwände 14, 15 gemeinsam mit den Querwänden 4 und der inneren Strömungsführung 3 als eine Einheit aus der äusseren Strömungsführung 2 herausschiebbar.

Zu diesem Zwecke weist die oben beschriebene Einheit 3, 4, 14 und 15 Aussenabmessungen auf, die die Innenabmessungen der äusseren Strömungsführung 2 nicht überragen, so dass es bloss einer lösbaren Befestigungseinrichtung bedarf, nach deren Öffnen die Baueinheit nach unten herausziehbar ist. Lediglich die Dachhaube 24 verbleibt in ihrer Lage, entweder weil sie ausschliesslich an der äusseren Strömungsführung 2 verankert ist oder weil sie zwar auch mit dem Rohrabschnitt 11 verbunden, dieser aber teleskopisch zwischen den Querwänden 4 oder einem zusätzlichen, hier nicht dargestellten Teleskoprohr herausziehbar ist. Die zuletzt erwähnte Ausführung hat überdies den Vorteil, dass der Wärmetauscher 1 seiner Höhe nach an verschiedene Bedingungen, wie Dachhöhe, Zug u.dgl. leicht anpassbar ist.

Zur Befestigung der Baueinheit 3, 4, 14 und 15 wäre es denkbar, die Aussenseiten der Querwände 4 über sich an die äussere Strömungsführung 2 anschmiegende Flanschen anzuschrauben. Damit wäre aber die Lösbarkeit insoferne erschwert, als der Wärmetauscher 1 in aller Regel über das Dach eines Stalles reicht und man daher erst auf das Dach steigen müsste, um die Schrauben überhaupt lösen zu können. Ausserdem wäre eine solche Befestigung auch vom statischen Gesichtspunkt ungünstig. Es wurde auch schon erwähnt, dass die äussere Strömungsführung 2 nach innen ragende, sich nur über einen begrenzten Winkelbereich erstreckende Konsolen aufweisen kann, an denen sich beispielsweise unterhalb der unteren Abdeckwände 14 von der inneren Strömungsführung 3 radial nach aussen ragende Pratzen abstützen. Solche Pratzen würden aber die Strömung des zu erwärmenden Fluids beeinträchtigen und könnten dabei zu unerwünschter Geräuschbildung Anlass geben. Ausserdem müsste zum Lösen der Einheit dieselbe erst einmal ein wenig angehoben, um den begrenzten Winkelbereich gedreht und erst anschliessend abgesenkt werden.

Günstiger ist es, wenn zur lösbaren Befestigung der Querwände 4 und der Abdeckwände 14, 15 sowie der inneren Strömungsführung 3 (mit Ausnahme gegebenenfalls des Rohrabschnittes 11) an deren Unterseite entfernbare Stützen 25 vorgesehen sind, die sich gemäss der dargestellten bevorzugten Ausführungsform schräg von innen und oben nach unten gegen die radial äussere Strömungsführung 2 erstrecken und dabei mit ihrem oberen Ende im Bereiche der schrägen Abdeckwände 14, und zwar an deren radial innerem Ende angreifen, so dass sie die Einheit 3, 4, 14, 15 nahe ihrem Schwerpunkte unterstützen und so - statisch gesehen - wenig Biegemomente auftreten.

Dazu sind auch diese Stützen 25 von unten her leicht zugänglich.

Nach Abnahme des Mündungsrohrabschnittes 20 und des Doppelstromventilators 17 braucht deshalb die Einheit 3, 4, 14, 15 nur von unten her unterstützt werden, wozu gegebenenfalls entsprechende Stützflächen (nicht dargestellt) vorgesehen sein können. Zur Unterstützung verwendet man zweckmässig ein wagenheberartiges Hebezeug oder kann auch zu beiden Seiten des Wärmetauschers 1 unter dem Dache je einen kleinen Flaschenzug mit Haken an der Unterseite des Rohrabschnittes 9 angreifen lassen. Sodann werden die Stützen 25 entfernt, worauf die Einheit 3, 4, 14, 15 heruntergelassen werden kann. Anschliessend ist sowohl die äussere Strömungsführung 2 wie auch die Einheit zur Reinigung gut zugänglich, so dass die hiefür erforderliche Arbeitszeit relativ kurz gehalten werden kann.

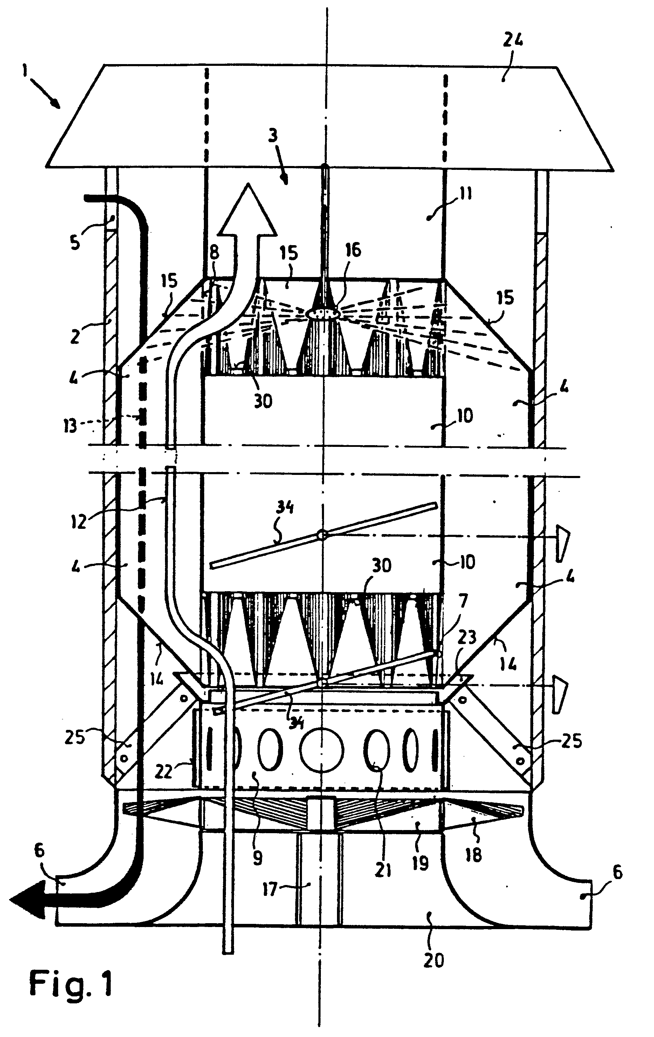

Die Querwände 4 können, wie dies nach dem Stande der Technik bereits vorgeschlagen worden ist, aus einer gewellten Blechtafel 26 gebildet sein (Fig. 2). In diesem Falle stellt sich auch das Problem der Herstellung der Abdeckwände 14 bzw. 15. Eine Herstellungsmöglichkeit bestünde darin, erst die Blechtafel 26 zu wellen und davor oder danach die Oberkanten 27 der Blechwellen schräg zuzuschneiden bzw. zu stanzen. Macht man diese Arbeit zuerst, so ist das Wellen der Blechtafel mit engen Toleranzen vorzunehmen. Wird hingegen die Abschrägung der Kanten 27 erst nachher vorgenommen, so ist zwar das Wellen der Blechtafel 26 erleichtert, jedoch das Schneiden der Kanten 27 mühselig und erschwert, weil diese Arbeit einerseits am gewellten, d.h. gerundeten Blech vorgenommen werden muss, anderseits manuell geschehen muss, weil ein Stanzen nicht mehr möglich ist. Anschliessend an das Wellen bzw. Herstellen der schrägen Kanten 27 müssten dann noch etwa dreieck-, im allgemeinen aber etwa trapezförmige Blechstücke über jene Wellen gelötet, geklebt oder geschweisst werden, deren Wellenöffnung gegen die innere Strömungsführung 3 (vgl. Fig. 1) und deren obere Auslassöffnung 8 weist, wogegen die dazwischen liegenden Wellen die zweiten Strömungskanäle 13 bilden und daher ohne Abdeckwände verbleiben. Theoretisch liesse sich auch bei Verwendung dünnen Bleches dasselbe formstanzen, wobei die schrägen Abdeckwände 14, 15 einstückig mit den Querwänden 4 geformt würden.

Günstiger ist jedoch eine Herstellung, wie sie an Hand der Fig. 2 in verschiedenen Stadien gezeigt ist. Dabei werden aus der Blechtafel 26 nicht nur trapezförmige Ausnehmungen 28, sondern auch Einschnitte 29 gestanzt. Der Winkel α dieser Einschnitte 29 bestimmt später den Winkel der Schräge, wie aus dem linken Teil der Fig. 2 ersichtlich ist. Die verbleibenden, sich nach oben verbreiternden trapezförmigen Wandungsteile sind mit der Blechtafel 26 über ihre kürzere 30 der zueinander parallelen Trapezseiten verbunden und bilden später die Abdeckwände 15 (analog werden die Abdeckwände 14 gebildet).

Durch die Verbindung über die Trapezseite 30, die im fertigen Stück aussen gegen die äussere Strömungsführung 2 zu liegen kommt, ergibt sich an dieser Stelle beim Herstellen der Wellen eine Versteifung, was die Einhaltung der Toleranzen begünstigt. Es entsteht dann als Zwischenprodukt eine Form, wie sie an Hand der Zwischenwände 4' ersichtlich ist. Nun braucht jeweils nur die Abdeckwand 15 gegen die Kanten 27 der Querwände 4 geklappt, um diese herumgelegt und anschliessend daran befestigt werden.

Für grössere Dimensionen kann eine Ausführung gemäss Fig. 3 von Vorteil sein, bei der je zwei Querwände 4 durch eine bogenförmige, sich an die äussere Strömungsführung 2 anschmiegende Wand 31 verbunden sind. Damit bilden die Querwände 4 paarweise zusammen mit der Bogenwand 31 im Querschnitt ein U. Um die oben beschriebene, leicht herausschiebbare Baueinheit 3, 4, 14, 15 herzustellen, können die Querwände 4 unterhalb des strichpunktiert angedeuteten unteren Randes 32 der inneren Auslassöffnung 8 seitliche Befestigungsflansche 33 zum Befestigen an der inneren Strömungsführung 3 (vgl. Fig. 1) aufweisen. Zweckmässig wie bei der Ausführungsform nach Fig. 2, wird der die Abdeckwand 15 bildende Wandungsteil einstückig mit der Bogenwand 31 ausgeführt und an der Oberseite der Querwände 4 über deren Oberkanten 27 geklappt. Gegebenenfalls kann die trapezförmige Abdeckwand 15 an ihrer grösseren, der Öffnung 8 zugekehrten Trapezseite ebenfalls einen nach oben weisenden Befestigungsflansch - entsprechend den Flanschen 33 - aufweisen. Anstelle von Blech können die Querwände auch aus sehr dünnem, vorzugsweise glasfaserverstärktem Kunststoff gebildet werden, was zwar den Wärmetauscheffekt wegen der schlechteren Wärmeleitfähigkeit gegenüber Metall geringfügig reduziert, die Herstellung aber enorm verbilligt, so dass gegebenenfalls auch mit grösseren Wärmetauscherflächen als beim Blech bei ansonsten gleichbleibenden äusseren Dimensionen derselbe Effekt erzielt werden kann.

**Patentansprüche**

1. Wärmetauscher für die Verwertung von Abwärme aus Schmutzteilchen enthaltender Abluft, mit im wesentlichen konzentrischen, inneren und äusseren Strömungsführungen (2, 3) für ein erstes wärmeführendes und eine zweites zu erwärmendes Fluid, zwischen welchen Strömungsführungen im wesentlichen radial bis zur äußeren Strömungsführung verlaufende Querwände (4) zur Bildung von einander abwechselnden ersten und zweiten Strömungskanälen (12, 13) vorgesehen sind, wobei die ersten Strömungskanäle für das erste Fluid jeweils von wenigstens einer radial inneren Einlassöffnung (7) bis zu wenigstens einer radial inneren Auslassöffnung (8) und die zweiten Strömungskanäle von wenigstens einer radial äusseren Einlassöffnung (5) bis zu wenigstens einer radial äusseren Auslassöffnung (6) für das zweite Fluid führen, dadurch gekennzeichnet, dass die Strömungskanäle (12,13) von der jeweiligen Einlass- (7) zur jeweiligen Auslassöffnung (8) im wesentlichen umlenkungsfrei geführt sind, und dass die ersten Strömungskanäle (12) an beiden Enden schräge Abdeckwände (14,15) aufweisen, die - beginnend an der jeweiligen Einlass - (7) bzw. Auslassöffnung (8) - in Richtung zum jeweils anderen Ende radial nach aussen zeigen.

2. Wärmetauscher nach Anspruch 1, dadurch gekennzeichnet, dass bei Winterbetrieb im Bereich der inneren Auslassöffnung(en) (8) eine gegen die schrägen Abdeckwände (15), bei Sommerbetrieb im Bereich über dem Wärmetauscher eine ins Freie gerichtete Sprinkleranlage (16) vorgesehen ist.

3. Wärmetauscher nach Anspruch 1 oder 2, dadurch gekennzeichnet, dass unterhalb der unteren schrägen Abdeckwand (14) eine Flüssigkeitsauffangrinne (23) angeordnet ist.

4. Wärmetauscher nach einem der vorhergehenden Ansprüche, dadurch gekennzeichnet, dass die schrägen Abdeckwände (14, 15) von etwa trapezförmigen Wandungsteilen gebildet sind, deren kleinere (30) der zueinander parallelen Trapezseiten im Bereiche der radial äusseren Strömungsführung (2), die grössere im Bereiche der inneren Strömungsführung (3), und der inneren Ein- bzw. Auslassöffnung(en) (7 bzw. 8) mit den Querwänden (4) verbunden ist.

5. Wärmetauscher nach Anspruch 4, dadurch gekennzeichnet, dass die Querwände (4) und die trapezförmigen Wandungsteile (15) aus einem gemeinsamen Wandkörper, z. B. einer Blechtafel (26), geschnitten bzw. gestanzt sind, wobei die trapezförmigen Wandungsteile (15) über ihre kleinere Trapezseite (30) einstückig mit den Querwänden (4) zusammenhängen.

6. Wärmetauscher nach einem der vorhergehenden Ansprüche, dadurch gekennzeichnet, dass die Abdeckwände (14, 15) gemeinsam mit den Querwänden (4) und der inneren Strömungsführung (3) aus der äusseren Strömungsführung (2) herausschiebbar angeordnet sind.

7. Wärmetauscher nach Anspruch 6, dadurch gekennzeichnet, dass zur lösbaren Befestigung der Quer- (4) und Abdeckwände (14, 15) sowie der inneren Strömungsführung (3) an deren Unterseite entfernbare Stützen (25) vorgesehen sind.

8. Wärmetauscher nach Anspruch 7, dadurch gekennzeichnet, dass die Stützen (25) schräg von innen und oben nach unten gegen die radial äussere Strömungsführung (2) verlaufen und insbesondere mit ihrem oberen Ende im Bereiche der schrägen Abdeckwände (14), zweckmässig an deren radial innerem Ende, angreifen.

9. Wärmetauscher nach einem der Ansprüche 6, 7 oder 8, dadurch gekennzeichnet, dass ein Endrohr (11) der inneren Strömungsführung (3), insbesondere ein eine Dachhaube (24) tragendes oberes Endrohr (11) der inneren Strömungsführung (3), teleskopisch verschiebbar ist.

10. Wärmetauscher nach einem der vorhergehenden Ansprüche, dadurch gekennzeichnet, dass unterhalb der unteren Abdeckwände (14) ein Ventilator (17) angeordnet ist.

## Claims

1. A heat exchanger for utilising waste heat from exhaust air containing particles of dirt, comprising substantially concentric, inner and outer flow guide means (2, 3) for a first heat-carrying fluid and a second fluid which is to be heated, wherein there are provided transverse walls (4) extending between said flow guide means substantially radially to the outer flow guide means, to form mutually alternate first and second flow passages (12, 13), wherein the first flow passages for the first fluid each lead respectively from at least one radially inner inlet opening (7) to at least one radially inner outlet opening (8) and the second flow passages lead from at least one radially outer inlet opening (5) to at least one radially outer outlet opening (6) for the second fluid, characterised in that the flow passages (12, 13) are taken substantially without a change in direction from the respective inlet opening (7) to the respective outlet opening (8) and that the first flow passages (12) have at both ends inclined masking walls (14, 15) which, beginning at the respective inlet opening (7) or outlet opening (8), point radially outwardly towards the respective other end.

2. A heat exchanger according to claim 1 characterised in that, in winter operation, provided in the region of the inner outlet opening or openings (8) is a sprinkler installation (16) which is directed against the inclined masking walls (15) and in summer operation, provided in the region over the heat exchanger is a sprinkler installation (16) which is directed into the open.

3. A heat exchanger according to claim 1 or claim 2 characterised in that a liquid collecting channel (23) is arranged beneath the lower inclined masking wall (14).

4. A heat exchanger according to one of the preceding claims characterised in that the inclined masking walls (14, 15) are formed by substantially trapezoidal wall portions, in which the shorter (30) of the mutually parallel sides of the trapezium is connected to the transverse walls (4) in the region of the radially outer flow guide means (2), while the longer is connected to the transverse walls (4) in the region of the inner flow guide means (3) and the inner inlet and outlet opening or openings (7, 8) respectively.

5. A heat exchanger according to claim 4 characterised in that the transverse walls (4) and the trapezoidal wall portions (15) are cut or stamped from a common wall body, for example a sheet metal panel (26), wherein the trapezoidal wall portions (15) are integrally connected to the transverse walls (4), by way of their shorter side (30).

6. A heat exchanger according to one of the preceding claims characterised in that the masking walls (14, 15), in conjunction with the transverse walls (4) and the inner flow guide means (3), are arranged to be pushed out of the outer flow guide means (2).

7. A heat exchanger according to claim 6 characterised in that for releasably fixing the transverse walls (4) and the masking walls (14, 15) as well as the inner flow guide means (3), removable supports (25) are provided at the underside thereof.

8. A heat exchanger according to claim 7 characterised in that the suports (25) extend inclinedly outwardly and downwardly towards the radially outer flow guide means (2) and engage in particular with their upper end in the region of the inclined masking walls (14), desirably at the radially inward end thereof.

9. A heat exchanger according to one of claims 6, 7 or 8 characterised in that an end pipe (11) of the inner flow guide means (3), in particular an upper end pipe (11), which carries a cover hood (24), of the inner flow guide means (3), is telescopically displaceable.

10. A heat exchanger according to one of the preceding claims characterised in that a fan (17) is arranged beneath the lower masking walls (14).

## Revendications

1. Echangeur de chaleur destiné à la récupération de la chaleur perdue provenant de l'air d'évacuation contenant des particules d'impureté, comportant des guidages d'écoulement (2, 3) intérieur et extérieur, essentiellement concentriques, pour un premier fluide caloporteur et un second fluide à réchauffer, entre lesquels guidages d'écoulement sont prévues des parois transversales (4) s'étendant sensiblement de façon radiale jusqu'au guidage d'écoulement extérieur pour la formation de premiers et de seconds canaux d'écoulement (12, 13) se relayant entre eux, les premiers canaux d'écoulement pour le premier fluide menant respectivement depuis au moins une ouverture d'entrée (7) radiale intérieure jusqu'à au moins une ouverture de sortie (8) radiale intérieure et les deuxièmes canaux d'écoulement menant depuis au moins une ouverture d'entrée radiale extérieure (5) jusqu'à au moins une ouverture de sortie radiale extérieure (6) pour le deuxième fluide, caractérisé en ce que les canaux d'écoulement (12, 13) sont menés essentiellement sans dérivation depuis l'ouverture d'entrée (7) respective jusqu'à l'ouverture de sortie (8) respective, et en ce que les premiers canaux d'écoulement (12) présentent, aux deux extrémités, des parois de recouvrement (14, 15) obliques, lesquelles - en partant du niveau de l'ouverture d'entrée respective (7) ou de l'ouverture de sortie (8) respective - sont dirigées respectivement sur l'autre extrémité, radialement vers l'extérieur.

2. Echangeur de chaleur selon la revendication 1, caractérisé en ce qu'il est prévu, pour le service d'hiver, dans la zone de la ou des ouverture(s) de sortie (8) interieure(s) un système de pulvérisation d'eau (16) dirigé vers les parois de recouvrement obliques (15) et en ce qu' il est prévu pour le service d'été un système de pulvérisation d'eau (16) dans la zone au-dessus de l'échangeur de chaleur dirigé à l'air libre.

3. Echangeur de chaleur selon la revendication 1 ou 2, caractérisé en ce qu'au-dessous de la paroi de revêtement oblique inférieure (14) est agencée une goulotte de réception de fluide (23).

4. Echangeur de chaleur selon l'une quelconque des revendications précédentes, caractérisé en ce que les parois de recouvrement obliques (14, 15) sont formées d'éléments de paroi sensiblement trapézoïdaux dont le plus petit côté (30) des côtés du trapèze parallèles entre eux est relié aux parois transversales (4) dans la zone du guidage d'écoulement (2) radial extérieur, le plus grand côté étant relié aux parois transversales (4) dans la zone de guidage d'écoulement (3) intérieur, et des ouvertures intérieures d'entrée ou de sortie (7 ou 8).

5. Echangeur de chaleur selon la revendication 4, caractérisé en ce que les parois transversales (4) et les éléments de parois (15) trapézoïdaux sont matricés à partir d'un corps de paroi commun, par exemple d'une feuille de tôle (26) découpée ou matricée, les éléments de paroi (15) trapézoïdaux communiquant d'un seul tenant par l'intermédiaire de leur plus petit côté de trapèze (30) avec les parois transversales (4).

6. Echangeur de chaleur selon l'une quelconque des revendications précédentes, caractérisé en ce que les parois de recouvrement (14, 15) sont agencées de façon à pouvoir être enlevées par coulissement conjointement avec les parois transversales (4) et le guidage d'écoulement (3) intérieur hors du guidage d'écoulement (2) extérieur.

7. Echangeur de chaleur selon la revendication 6, caractérisé en ce que des supports (25) amovibles sont prévus pour la fixation détachable des parois transversales (4) et des parois de recouvrement (14, 15) ainsi que du guidage d'écoulement (3) intérieur sur leur côté inférieur.

8. Echangeur de chaleur selon la revendication 7, caractérisé en ce que les supports (25) s'étendent obliquement depuis l'intérieur et le haut vers le bas, en opposition au guidage d'écoulement radial extérieur (2) et notamment en ce qu'ils viennent en attaque par leur extrémité supérieure dans la zone des parois de revêtement oblique (14), de façon judicieuse par leur extrémité intérieure radialement.

9. Echangeur de chaleur selon l'une des revendications 6, 7 ou 8, caractérisé en ce qu'un tube d'extrémité (11) du guidage d'écoulement (3) intérieur, notamment un tube d'extrémité (11) supérieur portant un auvent (24), du guidage d'écoulement (3) intérieur, est déplaçable télescopiquement.

10. Echangeur de chaleur selon l'une quelconque des revendications précédentes, caractérisé en ce qu'en dessous des parois de recouvrement (14) inférieures est agencé un ventilateur (17).

**Fig. 1**

Fig. 2

Fig. 3